# EUROPÄISCHE PATENTSCHRIFT

(11) **EP 2 995 180 B1**
(45) Veröffentlichungstag und Bekanntmachung des Hinweises auf die Patenterteilung: **12.07.2017**
(21) Anmeldenummer: 15170440.0
(22) Anmeldetag: 03.06.2015
(51) Int. Cl.: A01B 15/06, A01B 15/04

(54) **BODENBEARBEITUNGSWERKZEUG**
SOIL WORKING TOOL
OUTIL DE TRAITEMENT DE SOL

(30) Priorität: 07.08.2014 AT 505532014
(43) Veröffentlichungstag der Anmeldung: 16.03.2016
(73) Patentinhaber: BOEHLERIT GmbH & Co.KG., 8605 Kapfenberg (AT)
(72) Erfinder: Bärnthaler, Walter, 8641 St. Marein im Mürztal (AT)
(74) Vertreter: Wirnsberger, Gernot

(56) Entgegenhaltungen:
- EP-A1- 0 923 851
- EP-A1- 2 591 648
- WO-A1-2014/101907
- DE-U1-202010 017 959

## Beschreibung

Die Erfindung betrifft ein Bodenbearbeitungswerkzeug wie eine Grubberspitze oder Pflugschar, umfassend einen Grundkörper mit einem Schneidbereich, in dem zumindest ein Hartmetallkörper angeordnet ist, sowie einen an den Schneidbereich anschließenden Gleitbereich, in dem mehrere weitere Hartmetallkörper in Vertiefungen des Grundkörpers angeordnet sind.

Pflüge sind wohlbekannte Bodenbearbeitungsgeräte, die in der Landwirtschaft zur Aufbereitung des Bodens erforderlich sind. Pflüge herkömmlicher Bauart umfassen eine oder mehrere Pflugscharen, die in das Erdreich einstechen und über welche abgehobenes Erdreich zu einem anschließenden Streichblech geführt wird, dass das Erdreich wendet.

Beim Einstechen sowie dem Abheben des Erdreiches wirken relativ hohe Belastungen auf einzelne Pflugscharen. Die Pflugscharen sind zwar üblicherweise aus einem Stahl gebildet, allerdings sind die Belastungen so hoch, dass selbst Stahl relativ rasch verschleißen kann. Dies führt dazu, dass die Pflugscharen häufig zu wechseln sind. Dadurch verringert sich eine Produktivität, da für den Wechsel Standzeiten einzurechnen sind.

Gemäß dem Stand der Technik wurde schon versucht, das Problem der mangelnden Verschleißfestigkeit der Grundkörper aus Stahl durch Einsätze aus Hartmetall zu beheben. Hartmetall ist zwar im Vergleich mit Stahl um ein Vielfaches teurer, allerdings auch wesentlich verschleißfester. Da nicht der gesamte Grundkörper aus einem Hartmetall gefertigt wird, sondern bloß Einsätze für hoch beanspruchte Bereiche, sollten einerseits die dabei auftretenden Mehrkosten optimierbar und andererseits auch eine Standzeitverlängerung erreichbar sein, sodass sich die Mehrkosten letztlich rechnen.

Aus der DE 20 2010 017 959 U1 ist eine Pflugschar mit einem Grundkörper bekannt geworden, der mit mehreren Hartstoffelementen bestückt ist. An einem unteren Ende der Pflugschar, das zuerst in das Erdreich einsticht, sind ein oder mehrere Körper aus einem Hartstoff vorgesehen. Diese Körper sind schneidaktiv und umfassen mit einem Absatz ein unteres Ende des Grundkörpers. Des Weiteren können in einem zu einem oberen Ende hin anschließenden Bereich weitere Hartstoffelemente vorgesehen sein, die oberflächenbündig mit einer Oberfläche des Grundkörpers abschließen.

Wenngleich gemäß dem Stand der Technik schon versucht wurde, hoch beanspruchte Stellen der Grundkörper von Pflugscharen durch Bestückung mit verschleißfesten Komponenten gegen einen abrasiven Verschleiß widerstandsfähiger zu machen, haben sich doch auch Probleme ergeben. Die widerstandsfähigen Komponenten verschleißen zwar nicht, allerdings hat sich gezeigt, dass die angrenzenden Bereiche des Grundkörpers zumindest noch so stark beansprucht werden, dass es in diesen Bereichen zu einem sogenannten Auswaschen kommt, sodass letztlich die Komponenten keinen Halt mehr haben und sich vom Grundkörper lösen. Auch in diesem Fall ist es erforderlich, die Pflugschar zu wechseln. Mit anderen Worten: Die Komponenten, wie beispielsweise Hartstoffkomponenten gemäß der DE 20 2010 017 959 U1, verschleißen zwar als solche nicht, allerdings der Grundkörper in den umgebenen Bereichen, sodass sich die widerstandsfähigen Komponenten lösen. Solange dies der Fall ist, kann das Potenzial der abrasiv widerstandsfähigen Komponenten nicht ausgenutzt werden, weil diese vergleichsweise teuer sind. Bei anderen Bodenbearbeitungswerkzeugen wie Grubberspitzen ergeben sich analoge Probleme wie bei Pflugscharen.

Aufgabe der Erfindung ist es, ein Bodenbearbeitungswerkzeug der eingangs genannten Art anzugeben, bei welchem die weiteren Hartmetallkörper bei Belastung im Einsatz länger am Grundkörper halten.

Diese Aufgabe wird gelöst, wenn bei einem Bodenbearbeitungswerkzeug der eingangs genannten Art zumindest ein Teil der weiteren Hartmetallkörper in den Vertiefungen geneigt zu einer Oberfläche des Gleitbereiches befestigt ist.

Durch die erfindungsgemäß vorgesehene geneigte Befestigung der weiteren Hartmetallkörper relativ zur Oberfläche des Gleitbereiches kann gezielt in die Verteilung der beim Einsatz des Bodenbearbeitungswerkzeuges, z. B. einer Pflugschar oder Grubberspitze, wirkenden Kräfte eingegriffen werden. Die vorgesehene Neigung der weiteren Hartmetallkörper ermöglicht einen optimalen Kraftfluss des Erdreiches entlang des Bodenbearbeitungswerkzeuges, sodass Auswaschungen der Hartmetallkörper verzögert sind und die Hartmetallkörper in wirtschaftlicher Weise länger am Grundkörper halten.

Besonders bevorzugt ist es diesbezüglich, dass eine Oberfläche der geneigt befestigten weiteren Hartmetallkörper in Fließrichtung betrachtet an einem vorderen Ende tiefer als an einem hinteren Ende liegt. Das Erdreich trifft dann auf schräg angestellte Hartmetallkörper und wird durch diese in der Fließrichtung leicht angehoben, sodass auf nachfolgende Bereiche eine geringere Kraft wirkt, was sich insbesondere für den Grundkörper als günstig erweist und damit auch ein Auswaschen von in Fließrichtung nachgeordneten Hartmetallkörpern hintanhält.

Die Neigung ist bevorzugt so getroffen, dass das vordere Ende der geneigt befestigten weiteren Hartmetallkörper zur Oberfläche des Gleitbereiches hin rückversetzt ist. Dabei kann insbesondere vorgesehen sein, dass das hintere Ende der geneigt befestigten weiteren Hartmetallkörper etwa auf Höhe der Oberfläche des Gleitbereiches liegt. Dies stellt sicher, dass das über die Hartmetallkörper gleitende Erdreich von diesem stets ein wenig nach oben hin abgehoben und damit der nachfolgende Bereich des Grundkörpers geschont wird.

Besonders bevorzugt ist es, dass in Fließrichtung betrachtet das hintere Ende eines geneigt befestigten weiteren Hartmetallkörpers weniger zur Oberfläche des Gleitbereiches rückversetzt ist als ein vorderes Ende eines nachfolgenden geneigt befestigten weiteren Hartmetallkörpers. Dadurch können die vorstehend beschriebenen Wirkungen optimiert werden.

Die Vertiefungen sind zweckmäßigerweise eben ausgebildet, damit diese einfach herstellbar sind. Dabei können die Vertiefungen mit einem Neigungswinkel von 2° bis 20°, insbesondere 3° bis 10°, zu einer gedachten Verlängerung der Oberfläche des Gleitbereiches ausgebildet sein. Diese Winkel sind in der Regel ausreichend, um die gewünschten Wirkungen zu erreichen. Kleinere Winkel als 3°, insbesondere 2°, sind in Bezug auf mögliche Auswaschungen nicht mehr bevorzugt. Größere Winkel als 10°, insbesondere 20°, führen zu einer stark unregelmäßigen Oberfläche für das auftreffende Erdreich, was eine gezielte Kontrolle des Fließverhaltens und damit auch der Belastungen für Grundkörper und Hartmetallkörper erschwert.

Es kann auch vorgesehen sein, dass die geneigt befestigten weiteren Hartmetallkörper zu einer Außenseite hin abfallend befestigt sind. Wenngleich eine Neigung relativ zur Fließrichtung grundsätzlich bevorzugt ist, können die Kräfte auch durch eine zur Seite hin geneigte Befestigung gezielt beeinflusst werden. Möglich ist es auch, dass die Hartmetallkörper sowohl in Fließrichtung als auch zur Seite hin geneigt sind.

Im Grundkörper kann eine Öffnung zur Aufnahme eines Befestigungsmittels vorgesehen sein, wobei in Fließrichtung knapp vor der Öffnung ein weiterer Hartmetallkörper angeordnet ist. Der Hartmetallkörper ist wiederum in einer Vertiefung angeordnet und kann auch relativ zur Fließrichtung und/oder zu einer Außenseite hin geneigt sein. Dieser weitere Hartmetallkörper hat den Zweck, Auswaschungen im Bereich der Aufnahme zu vermeiden. Es wurde nämlich erkannt, dass sich selbst in diesem Bereich, der einer moderaten Belastung unterliegt, Auswaschungen ein Problem darstellen können, und zwar in diesem Fall in Bezug auf den Halt durch das Befestigungsmittel. Wird die Aufnahme im Einsatz nach und nach ausgewaschen, so löst sich letztlich das Befestigungsmittel und damit das gesamte Werkzeug von der Arbeitseinrichtung, beispielsweise einer Pflugschar vom Pflug. Auch eine derartige Situation führt zu unerwünschten Wartungsarbeiten. Dies kann verhindert werden, wenn ein entsprechender weiterer Hartmetallkörper knapp vor der Öffnung angeordnet ist.

Der Grundkörper ist üblicherweise aus einem Stahl gebildet.

Die weiteren Hartmetallkörper, die besonders verschleißfest sind, sind zur Minimierung eines Materialaufwandes mit einer Stärke von maximal 2 mm, vorzugsweise maximal 1,5 mm, ausgebildet.

Die Vertiefungen sind mit Vorteil rund ausgebildet. Die Vertiefungen lassen sich dann nämlich einfach durch Bohren im Grundkörper erstellen. Dies bringt im Vergleich mit anderen Geometrien in Bezug auf eine effiziente Herstellung große Vorteile. Insbesondere in diesem Fall ist es zweckmäßig, dass die weiteren Hartmetallkörper als runde Plättchen ausgebildet sind.

Die weiteren Hartmetallkörper können am Grundkörper stoffflüssig befestigt sein, wobei diese bevorzugt am Grundkörper angelötet sind.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
- Fig. 1: eine teilweise geschnittene Grubberspitze;
- Fig. 2: eine Aufstellung verschiedener Varianten einer Grubberspitze;
- Fig. 3: einen Schnitt für die Variante c) gemäß Fig. 2 entlang der Linie III-II in Fig. 2;
- Fig. 4: einen Schnitt entlang der Linie IV-IV in Fig. 3;
- Fig. 5: einen Schnitt entlang der Linie V-V in Fig. 3.

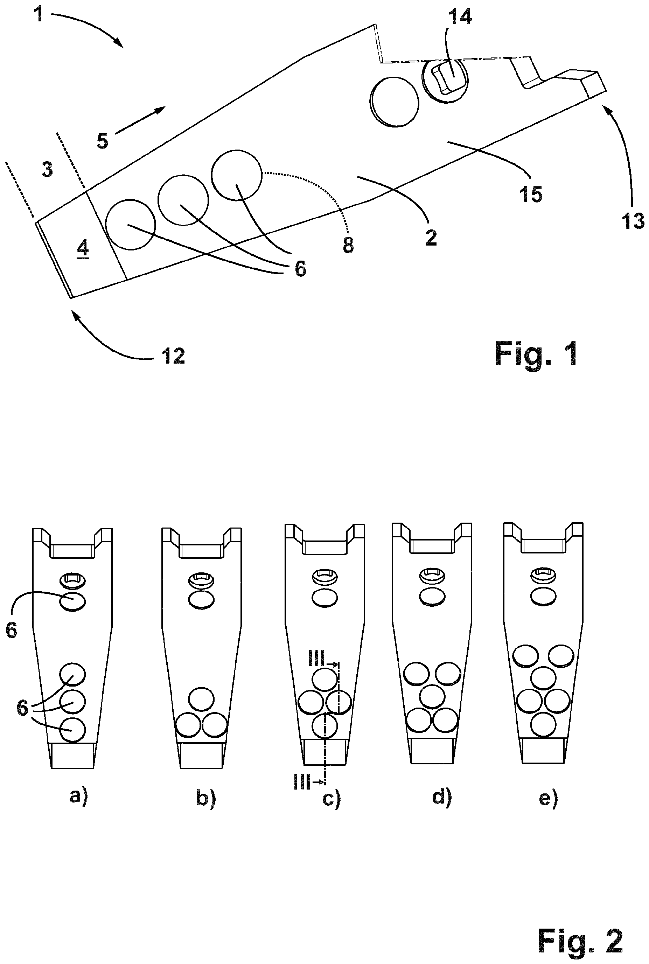

In Fig. 1 ist ein erfindungsgemäßes Bodenbearbeitungswerkzeug dargestellt, im Konkreten eine teilweise geschnittene erfindungsgemäße Grubberspitze 1. Die Grubberspitze 1 umfasst einen Grundkörper 2, der sich von einem unteren Ende 12 zu einem oberen Ende 13 erstreckt. Der Grundkörper 2 besteht aus einem Stahl. Üblicherweise ist der Grundkörper 2 einteilig ausgebildet. Zum oberen Ende 13 hin weist der Grundkörper 2 eine Öffnung 14 für ein Befestigungsmittel auf. Über diese Öffnung 14 kann die Grubberspitze 1 bei Bedarf abgenommen und gegen eine neue Grubberspitze 1 getauscht werden.

Im vorderen Bereich der Grubberspitze 1 gemäß Fig. 1 ist ein Schneidbereich 3 gebildet, in dem ein Hartmetallkörper 4 befestigt ist. In diesem Schneidbereich 3 erfolgt ein Eingriff der Grubberspitze 1 in ein Erdreich, wenn die Grubberspitze 1 im Einsatz ist. Der Hartmetallkörper 4 kann dabei etwas vorragend befestigt sein, sodass der Hartmetallkörper 4 quasi als Schneide dient. Der Hartmetallkörper 4 ist als rechteckiges Plättchen ausgeführt, das sich im Bereich des unteren Endes 13 über die gesamte Breite der Grubberspitze 1 erstreckt. Üblicherweise weist der Hartmetallkörper 4 eine Stärke von weniger als 4 mm, insbesondere weniger als 3 mm, auf.

An den Schneidbereich 3 mit dem Hartmetallkörper 4 schließt ein Gleitbereich 5 an, in dem weitere Hartmetallkörper 6 befestigt sind. Gemäß Fig. 1 schließen drei weitere Hartmetallkörper 6 im Gleitbereich 5 an den Hartmetallkörper 4 im Schneidbereich 3 an. In diesen Bereichen ist an sich ein hoher abrasiver Verschleiß gegeben, welchem durch den Einsatz der weiteren Hartmetallkörper 6 Rechnung getragen werden soll. Die weiteren Hartmetallkörper 6 können dabei in verschiedener Form angeordnet sein, wie dies für einige Beispiele in Fig. 2 ersichtlich ist. Die Anordnung einzelner weiterer Hartmetallkörper 6 erfolgt dabei so, dass einem erwarteten Verschleiß optimal entgegengewirkt wird.

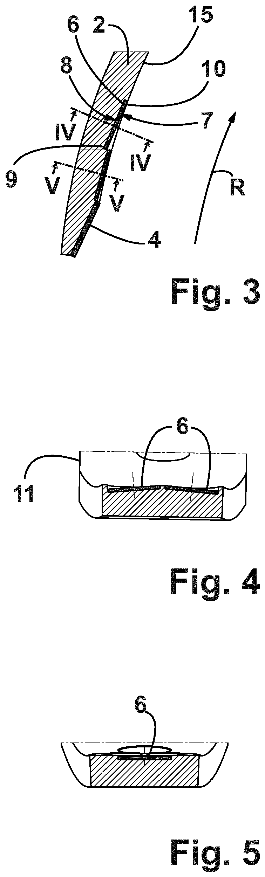

Für die Variante c) gemäß Fig. 2 ist die Anordnung der weiteren Hartmetallkörper 6 exemplarisch in Fig. 3 bis 5 dargestellt. Wie im Querschnitt ersichtlich ist, sind die weiteren Hartmetallkörper 6 in einzelnen Vertiefungen 8 angeordnet. Die Vertiefungen 8 sind mit einer Form ausgebildet, welchen jenen der weiteren Hartmetallkörper 6 entspricht. Die Vertiefungen 8 sind ebenso wie die weiteren Hartmetallkörper 6 bevorzugt jeweils kreisförmig ausgebildet. Dadurch lassen sich die Vertiefungen 8 in sehr einfacher Weise durch Bohren im Grundkörper 2 einarbeiten. Andere Formen würden insbesondere bei einer Vielzahl von weiteren Hartmetallkörpern 6 zu einem erheblichen Arbeitsaufwand für die Fertigung der Vertiefungen 8 führen. Die Vertiefungen 8 sind eben ausgebildet, sodass die weiteren Hartmetallkörper 6, die in der Regel als entsprechende Plättchen ausgebildet sind, in diesen angeordnet und stoffschlüssig angebracht werden können, insbesondere durch Löten. Des Weiteren sind die Vertiefungen 8 so ausgebildet, dass deren Grundfläche gegenüber einer Oberfläche 15 des Gleitbereiches 5 geneigt ist. Diese Neigung kann so beschaffen sein, wie in Fig. 3 ersichtlich, dass die Grundfläche der Vertiefungen 8 in Fließrichtung R betrachtet einen spitzen Winkel mit der Oberfläche 15 bzw. deren gedachten Verlängerung im Bereich der Vertiefungen 8 bildet. Dadurch folgt automatisch, dass auch die ebenen weiteren Hartmetallkörper 6 bzw. deren Oberflächen 7 eine entsprechende Neigung gegenüber der Oberfläche 15 aufweisen. Gemäß Fig. 3 ist diese Neigung für die ersichtlichen weiteren Hartmetallkörper 6 so ausgebildet, dass die Neigung in Fließrichtung R ansteigt. Des Weiteren sind die weiteren Hartmetallkörper 6 so in den Vertiefungen 8 angeordnet bzw. die Vertiefungen 8 entsprechend ausgebildet, dass ein vorderes Ende 9 eines weiteren Hartmetallkörpers 6 in Fließrichtung R jeweils stärker zur Oberfläche 15 rückversetzt ist. Dabei kann gemäß Fig. 3 gleichzeitig vorgesehen sein, dass ein hinteres Ende 10 der weiteren Hartmetallkörper 6 etwa bündig mit der Oberfläche 15 abschließt. Dadurch ergeben sich stufenweise stets weiter rückversetzte weitere Hartmetallkörper 6. Darüber hinaus wird jeweils an einem hinteren Ende 10 das Erdreich über dazwischenliegende Bereiche des Grundkörpers 2 abgehoben, ehe dieses wiederum auf einen weiteren Hartmetallkörper 6 trifft. Hierdurch wird der Grundkörper 2 im grundsätzlich auch hoch belasteten Bereich zwischen den weiteren Hartmetallkörpern 6 geschont, wodurch Auswaschungen deutlich verringert werden. Auch bleiben die angelöteten weiteren Hartmetallkörper 6 länger funktionstüchtig am Grundkörper 2.

Aus Fig. 4 ist des Weiteren ersichtlich, dass die weiteren Hartmetallkörper 6 auch zu einer Außenseite 11 hin geneigt befestigt sein können. Die individuelle Positionierung der weiteren Hartmetallkörper 6 auch in seitlich zur Außenseite 11 abfallender Position hängt von den jeweiligen Einsatzbedingungen ab und wird so optimiert, dass Auswaschungen möglichst vermieden werden. Damit im Einklang kann gemäß Fig. 5 ein in Fließrichtung R vorgeordneter, entlang der Grubberspitze 1 zentral angeordneter weiterer Hartmetallkörper 6 lediglich in Fließrichtung R geneigt angeordnet sein. Mehrere weitere Hartmetallkörper 6 sowie deren in Fließrichtung R und/oder zur Außenseite 11 hin geneigte Positionierung erlauben es somit, die durch das Erdreich verursachten Kräfte optimal auf die weiteren Hartmetallkörper 6 zu verteilen und den Grundkörper 2 im Bereich zwischen diesen zu schonen, sodass es nicht oder nur in verringertem Ausmaß zu Auswaschungen kommt.

Bei den übrigen Varianten a), b), d) und e) gemäß Fig. 2 ist die Anordnung der weiteren Hartmetallkörper 6 analog. Gemäß Variante a) in Fig. 2 sind die entlang einer zentralen Linie der Grubberspitze 1 verlaufenden weiteren Hartmetallkörper 6 in Fließrichtung R so angeordnet, dass eine Neigung jeweils stärker wird. Analoges trifft auf die anderen Varianten zu, wobei eine seitliche Neigung gemäß Fig. 4 vorgesehen sein kann, wenn in Fließrichtung R betrachtet mehrere weitere Hartmetallkörper 6 auf gleicher Höhe positioniert sind.

Wichtig kann es auch sein, dass vor der Öffnung 14, die in Fig. 1 ersichtlich ist, ein noch weiterer Hartmetallkörper 6 angeordnet ist. Auch dieser kann gegebenenfalls geneigt angeordnet sein. Dieser weitere Hartmetallkörper 6 dient dazu, Auswaschungen im Bereich der Öffnung 14 zu vermeiden, welche ein Befestigungsmittel aufnimmt. Es wäre ungünstig, wenn zwar im Schneidbereich 3 sowie im daran anschließenden Gleitbereich 5 die abrasiv widerstandsfähigen Elemente aufgrund der getroffenen Geometrie zwar dauerhaft in Position gehalten werden könnten, aber ein durch die Öffnung 14 geführtes Befestigungsmittel sich im Laufe der Zeit aufgrund einer Auswaschung lösen würde. Durch den erwähnten weiteren Hartmetallkörper 6, der relativ knapp an der Öffnung 14 angeordnet ist, können Auswaschungen in diesem Bereich auch vermieden werden.

Das erfindungsgemäße Konzept ist vorstehend für eine Grubberspitze 1 dargelegt, kann aber auch bei anderen Bodenbearbeitungswerkzeugen analog angewendet werden, insbesondere einer Pflugschar oder anderen in Erdreich einstechenden Werkzeugen.

## Patentansprüche

1. Bodenbearbeitungswerkzeug wie eine Grubberspitze (1) oder eine Pflugschar, umfassend einen Grundkörper (2) mit einem Schneidbereich (3), in dem zumindest ein Hartmetallkörper (4) angeordnet ist, sowie einen an den Schneidbereich (3) anschließenden Gleitbereich (5), in dem mehrere weitere Hartmetallkörper (6) in Vertiefungen (8) des Grundkörpers (2) angeordnet sind, **dadurch gekennzeichnet, dass** zumindest ein Teil der weiteren Hartmetallkörper (6) in den Vertiefungen (8) geneigt zu einer Oberfläche (15) des Gleitbereiches (5) befestigt ist.

2. Bodenbearbeitungswerkzeug nach Anspruch 1, **dadurch gekennzeichnet, dass** eine Oberfläche (7) der geneigt befestigten weiteren Hartmetallkörper (6) in Fließrichtung (R) betrachtet an einem vorderen Ende (9) tiefer als an einem hinteren Ende (10) liegt.

3. Bodenbearbeitungswerkzeug nach Anspruch 1 oder 2, **dadurch gekennzeichnet, dass** das vordere Ende (9) der geneigt befestigten weiteren Hartmetallkörper (6) zur Oberfläche (15) des Gleitbereiches (5) hin rückversetzt ist.

4. Bodenbearbeitungswerkzeug nach Anspruch 3, **dadurch gekennzeichnet, dass** das hintere Ende (10) der geneigt befestigten weiteren Hartmetallkörper (6) etwa auf Höhe der Oberfläche (15) des Gleitbereiches (5) liegt.

5. Bodenbearbeitungswerkzeug nach einem der Ansprüche 1 bis 4, **dadurch gekennzeichnet, dass** in Fließrichtung (R) betrachtet das hintere Ende (10) eines geneigt befestigten weiteren Hartmetallkörpers (6) weniger zur Oberfläche (15) des Gleitbereiches (5) rückversetzt ist als ein vorderes Ende eines nachfolgenden geneigt befestigten weiteren Hartmetallkörpers (6).

6. Bodenbearbeitungswerkzeug nach einem der Ansprüche 1 bis 5, **dadurch gekennzeichnet, dass** die Vertiefungen (7) eben ausgebildet sind.

7. Bodenbearbeitungswerkzeug nach Anspruch 6, **dadurch gekennzeichnet, dass** die Vertiefungen (7) mit einem Neigungswinkel von 2° bis 20°, insbesondere 3° bis 10°, zu einer gedachten Verlängerung der Oberfläche (15) des Gleitbereiches (5) ausgebildet sind.

8. Bodenbearbeitungswerkzeug nach einem der Ansprüche 1 bis 7, **dadurch gekennzeichnet, dass** die geneigt befestigten weiteren Hartmetallkörper (6) zu einer Außenseite (11) hin abfallend befestigt sind.

9. Bodenbearbeitungswerkzeug nach einem der Ansprüche 1 bis 8, **dadurch gekennzeichnet, dass** eine Öffnung (14) zur Aufnahme eines Befestigungsmittels vorgesehen ist, wobei in Fließrichtung (R) knapp vor der Öffnung (14) ein weiterer Hartmetallkörper (6) angeordnet ist.

10. Bodenbearbeitungswerkzeug nach einem der Ansprüche 1 bis 9, **dadurch gekennzeichnet, dass** der Grundkörper (2) aus einem Stahl gebildet ist.

11. Bodenbearbeitungswerkzeug nach einem der Ansprüche 1 bis 10, **dadurch gekennzeichnet, dass** die weiteren Hartmetallkörper (6) mit einer Stärke von maximal 2 mm, vorzugsweise maximal 1,5 mm, ausgebildet sind.

12. Bodenbearbeitungswerkzeug nach einem der Ansprüche 1 bis 11, **dadurch gekennzeichnet, dass** die Vertiefungen (7) rund ausgebildet sind.

13. Bodenbearbeitungswerkzeug nach einem der Ansprüche 1 bis 12, **dadurch gekennzeichnet, dass** die weiteren Hartmetallkörper (6) als runde Plättchen ausgebildet sind.

14. Bodenbearbeitungswerkzeug nach einem der Ansprüche 1 bis 13, **dadurch gekennzeichnet, dass** die weiteren Hartmetallkörper (6) am Grundkörper (2) angelötet sind.

## Claims

1. Soil working tool such as a cultivator tip (1) or a ploughshare, comprising a basic body (2) with a cutting area (3) in which at least one hard metal body element (4) is arranged, as well as a sliding area (5), adjacent to the cutting area (3), in which several further hard metal elements (6) are arranged in recesses (8) of the basic body (2), **characterised in that** at least some of the further hard metal elements (6) are fastened in the recesses (8) in an oblique manner in relation to the surface (15) of the sliding area (5).

2. Soil working tool according to claim 1 **characterised in that** seen in a direction of flow (R) a surface (7) of the obliquely fastened further hard metal elements (6) lies deeper at a front end (9) than at a rear end (10).

3. Soil working tool according to claim 1 or 2 **characterised in that** the front end (9) of the obliquely fastened further hard metal elements (6) is set back in relation to the surface (15) of the sliding area (5).

4. Soil working tool according to claim 3 **characterised in that** the rear end (10) of the obliquely fastened hard metal elements (6) lies at round the level of the surface (15) of the sliding surface (5).

5. Soil working tool according to any one of claims 1 to 4 **characterised in that** seen in the direction of flow (R) the rear end (10) of an obliquely fastened hard metal element (6) is less set back in relation to the surface (15) of the sliding area (5) than a front end of a following obliquely fastened further hard metal element (6).

6. Soil working tool according to any one of claims 1 to 5 **characterised in that** the recesses (7) are designed level.

7. Soil working tool according to claim 6 **characterised in that** the recesses (7) are designed with an angle of inclination of 2° to 20°, more particularly 3° to 10° in relation to an imaginary prolongation of the surface (15) of the sliding area (5).

8. Soil working tool according to any one of claims 1 to 7 **characterised in that** the obliquely fastened further hard metal elements (6) are fastened falling away towards an outer side (11).

9. Soil working tool according to any one of claims 1 to 8 **characterised in that** an opening (14) for receiving a fastening means is provided, wherein in the direction of flow (R) a further hard metal element (6) is arranged just before the opening (14).

10. Soil working tool according to any one of claims 1 to 9 **characterised in that** the basic body (2) is made of steel.

11. Soil working tool according to any one of claims 1 to 10 **characterised in that** the further hard metal elements (6) are produced with a thickness of maximum of 2 mm, preferably maximum 1.5 mm.

12. Soil working tool according to any one of claims 1 to 11 **characterised in that** the recesses (7) are round.

13. Soil working tool according to any one of claims 1 to 12 **characterised in that** the further hard metal elements (6) are designed in the form of small round plates.

14. Soil working tool according to any one of claims 1 to 13 **characterised in that** the further hard metal elements (6) are soldered onto the basic body (2).

## Revendications

1. Outil de travail du sol, comme une pointe de cultivateur (1) ou un soc de charrue, comprenant un corps de base (2) avec une zone de coupe (3) dans laquelle est placé au moins un corps (4) en métal dur, ainsi qu'une zone de glissement (5) se raccordant sur la zone de coupe (3) dans laquelle plusieurs corps (6) en métal dur supplémentaires sont placés dans des renfoncements (8) du corps de base (2), **caractérisé en ce qu'**au moins une partie des corps (6) en métal dur supplémentaires est fixée dans les renfoncements (8), en oblique par rapport à une surface (15) de la zone de glissement (5).

2. Outil de travail du sol selon la revendication 1, **caractérisé en ce que**, considérée dans la direction du flux (R), une surface (7) des corps (6) en métal dur supplémentaires fixés en oblique se situe plus bas sur une extrémité avant (9) que sur une extrémité arrière (10).

3. Outil de travail du sol selon la revendication 1 ou 2, **caractérisé en ce que** l'extrémité avant (9) des corps (6) en métal dur supplémentaires fixés en oblique est en retrait par rapport à une surface (15) de la zone de glissement (5).

4. Outil de travail du sol selon la revendication 3, **caractérisé en ce que** l'extrémité arrière (10) des corps (6) en métal dur supplémentaires fixés en oblique se situe approximativement à hauteur de la surface (15) de la zone de glissement (5).

5. Outil de travail du sol selon l'une quelconque des revendications 1 à 4, **caractérisé en ce que**, considérée dans la direction du flux (R), l'extrémité arrière (10) d'un corps (6) en métal dur supplémentaire fixé en oblique est moins en retrait par rapport à la surface (15) de la zone de glissement (5) qu'une extrémité avant d'un corps (6) en métal dur supplémentaire fixé en oblique suivant.

6. Outil de travail du sol selon l'une quelconque des revendications 1 à 5, **caractérisé en ce que** les renfoncements (7) sont conçus en étant plans.

7. Outil de travail du sol selon la revendication 6, **caractérisé en ce que** les renfoncements (7) sont conçus avec un angle d'inclinaison de 2° à 20°, notamment de 3° à 10° par rapport à un prolongement imaginaire de la surface (15) de la zone de glissement (5).

8. Outil de travail du sol selon l'une quelconque des revendications 1 à 7 **caractérisé en ce que** les corps (6) en métal dur supplémentaires fixés en oblique sont fixés en inclinaison descendante par rapport à une face extérieure (11).

9. Outil de travail du sol selon l'une quelconque des revendications 1 à 8, **caractérisé en ce qu'**il est prévu un orifice (14) destiné à recevoir un moyen de fixation, dans la direction du flux (R), peu avant l'orifice (14) étant placé un corps (6) en métal dur supplémentaire.

10. Outil de travail du sol selon l'une quelconque des revendications 1 à 9, **caractérisé en ce que** le corps de base (2) est formé en un acier.

11. Outil de travail du sol selon l'une quelconque des revendications 1 à 10, **caractérisé en ce que** les corps (6) en métal dur supplémentaires sont conçus avec une épaisseur d'un maximum de 2 mm, de préférence d'un maximum de 1,5 mm.

12. Outil de travail du sol selon l'une quelconque des revendications 1 à 11, **caractérisé en ce que** les renfoncements (7) sont conçus de forme ronde.

13. Outil de travail du sol selon l'une quelconque des revendications 1 à 12, **caractérisé en ce que** les corps (6) en métal dur supplémentaires sont conçus en tant que plaquettes rondes.

14. Outil de travail du sol selon l'une quelconque des revendications 1 à 13, **caractérisé en ce que** les corps (6) en métal dur supplémentaires sont brasés sur le corps de base (2).
